# EUROPÄISCHE PATENTSCHRIFT

(11) **EP 2 327 622 B1**
(45) Veröffentlichungstag und Bekanntmachung des Hinweises auf die Patenterteilung: **29.05.2013**
(21) Anmeldenummer: 10190567.7
(22) Anmeldetag: 09.11.2010
(51) Int. Cl.: B63G 7/04, G02B 6/44

(54) **Unbemanntes Unterwasserfahrzeug und Einrichtung zum Anschluss eines Lichtwellenleiterkabels an ein unbemanntes Unterwasserfahrzeug**
Unmanned submarine and device for connecting a fibre optic cable to an unmanned submarine
Sous-marin non habité et dispositif de connexion d'un câble conducteur d'ondes lumineuses sur un sous-marin non habité

(30) Priorität: 18.11.2009 DE 102009053742
(43) Veröffentlichungstag der Anmeldung: 01.06.2011
(73) Patentinhaber: ATLAS ELEKTRONIK GmbH, 28309 Bremen (DE)
(72) Erfinder: Jung, Torsten, 28832, Achim (DE)

(56) Entgegenhaltungen:
- EP-A2- 0 939 327
- WO-A1-01/21476
- WO-A1-02/06146
- WO-A1-2008/130682
- WO-A2-2006/074953
- DE-A1- 3 112 000
- DE-A1-102004 062 126
- FR-A1- 2 668 446
- FR-A2- 2 325 557
- US-A- 4 010 619
- US-B1- 6 279 501

## Beschreibung

Die Erfindung betrifft eine Einrichtung zum Anschluss eines Lichtwellenleiterkabels an ein unbemanntes Unterwasserfahrzeug sowie ein unbemanntes Unterwasserfahrzeug, welches mittels eines Lichtwellenleiterkabels steuerbar ist, das von einer Trägerplattform nachführbar ist,

Unbemannte Unterwasserfahrzeuge (UUV, Unmanned Underwater Vehicle) werden für eine Vielzahl von Aufgaben unter Wasser, sog. Missionen, eingesetzt, z.B. im zivilen Bereich für das Absuchen und Untersuchen des Meeresbodens, die Kontrolle von Kabeln und Rohrleitungen auf dem Meeresboden sowie die Bergung von verloren gegangenen Geräten. Im militärischen Bereich werden unbemannte Unterwasserfahrzeuge insbesondere zur Minenaufklärung und Minenvernichtung eingesetzt, aber auch für solche Einsätze herangezogen, die für bemannte Missionen ein hohes Risiko darstellen.

Als ferngesteuertes Unterwasserfahrzeug bzw. sog. Remotely Operated Vehicle (ROV) wird das Unterwasserfahrzeug mittels eines Verbindungskabels ferngelenkt, welches dem Unterwasserfahrzeug von einer Trägerplattform, bspw. einem Überwasserschiff, nachgeführt wird. Das Fernlenkkabel ist dabei üblicherweise ein leistungsfähiges Lichtwellenleiterkabel. Auf dem Gebiet der Minenjagd werden über Lichtwellenleiterkabel ferngelenkte Unterwasserfahrzeuge in zwei Varianten verwendet. Eine erste Variante wird zur näheren Identifikation eines, bspw. durch Sonar, aufgefundenen Objekts, z.B. einer Mine eingesetzt und anschließend zur Trägerplattform zurückgeholt. Zur Minenräumung wird eine zweite Variante eingesetzt, welche zusätzlich eine Sprengladung trägt und nach Auffinden des vorher identifizierten Ziels bei der Vernichtung des Ziels zugleich selbst zerstört wird. Bei derartigen Minenjagddrohnen, d.h. zur Minenbekämpfung eingesetzten unbemannten Unterwasserfahrzeugen, wird der Verlust des Unterwasserfahrzeugs im Hinblick auf den gewünschten Räumerfolg in Kauf genommen.

Bei derartigen Minenjagddrohnen führt allerdings auch ein Fehlschlagen der Minenräumung zum Verlust des Unterwasserfahrzeugs, da es aus Sicherheitsgründen nicht mehr an Bord genommen werden und seine mitgeführte Sprengladung gezündet wird. Auch die o.g. erste Variante von Unterwasserfahrzeugen kann bei Minenjagdmissionen verloren gehen, wenn nämlich durch das Unterwasserfahrzeug der Auslösemechanismus einer aufgefundenen Seemine aktiviert wird.

Gemäß dem Stand der Technik werden zur Steuerung von Unterwasserfahrzeugen Lichtwellenleiter-Schwimmkabel eingesetzt, welche die zum Einholen des Unterwasserfahrzeugs erforderliche Zugfestigkeit aufweisen. Dabei ist ein geringes Gewicht des Schwimmkabels erwünscht, um ein Absinken des Kabels zu vermeiden.

Die Kosten einer Minenräummission sind regelmäßig hoch, zumal bei einem Verlust des Unterwasserfahrzeugs gleichzeitig das Lichtwellenleiterkabel zerstört wird und ersetzt werden muss. Dabei muss gegebenenfalls ein Großteil des Kabels von der Winsch genommen und ein neues Lichtwellenleiterkabel eingerichtet und aufgespult werden, was neben den Beschaffungskosten für das Kabel mit hohem Arbeitsaufwand verbunden ist.

US 2008/0087186 A1 offenbart ein Verfahren zur Vernichtung einer lokalisierten Mine, wobei zwecks Sprengung der Mine ein unbemanntes Unterwasserfahrzeug als Primärfahrzeug mit einem unbemannten, ferngesteuerten Unterwasserfahrzeug als Sekundärfahrzeug kooperiert, welches mit einer Sprengladung ausgerüstet ist. Zur Reduzierung der Räumungskosten gegenüber einem Verfahren, das ein Einwegfahrzeug nutzt, werden Primär- und Sekundärfahrzeug als ein autonom operierendes Tandem eingesetzt, bei dem das Sekundärfahrzeug von dem Primärfahrzeug ferngesteuert wird. Das Sekundärfahrzeug ist als Einwegfahrzeug konzipiert und mit einer Sprengladung zur Minenvernichtung und einem dazugehörigen Zünder ausgestattet. Die Antriebsenergie wird dem Sekundärfahrzeug von einer Energiequelle des Primärfahrzeugs über ein Verbindungskabel geliefert, welches außerdem noch zur Übertragung von Lenksignalen an eine Lenkvorrichtung des Sekundärfahrzeugs und zur Übertragung eines den Zünder aktivierenden Auslösesignals dient. Das Tandem fährt als autonomes, also von einer Plattform unabhängiges, Tandem eigenständig zu einer zuvor lokalisierten Mine. Dort bringt das Primärfahrzeug das Sekundärfahrzeug durch Fernsteuerung unmittelbar an die Mine heran und löst durch entsprechendes Zündsignal den Zünder der Sprengladung aus.

Ähnlich einer unmittelbaren Steuerung einer zerstörbaren Minenjagddrohne über ein Verbindungskabel von einer Plattform wird auch bei dem bekannten Einsetzen eines Primär- und Sekundärfahrzeugs gleichzeitig mit einem Verlust des Sekundärfahrzeugs das Verbindungskabel zerstört. Es sind daher nach einer Minenräummission mit entsprechendem Kostenaufwand das Unterwasserfahrzeug und das Verbindungskabel zu ersetzen.

Aus DD 301 215 A7 ist ein Verfahren und ein Gerätesystem zur Vernichtung von Minen bekannt mit einem unbemannten Unterwasserfahrzeug mit autonomer Energieversorgung zum Transport einer Minenvernichtungsladung, wobei ein Steuerkabel zur Steuerung des Unterwasserfahrzeugs von Bord eines Schiffes gleichzeitig als Zündkabel verwendet wird. Das kombinierte Steuer- und Zündkabel ist galvanisch oder berührungsfrei, insbesondere induktiv, mit einer Zündvorrichtung der Minenvernichtungsladung gekoppelt. Um bei positiver Identifizierung einer Mine die Minenvernichtungsladung an der Mine abzulegen und das Unterwasserfahrzeug vor der Zündung der Sprengladung zur Trägerplattform zurückzuführen ist das Verbindungskabel in zwei Teillängen entsprechend dem Aktionsradius unterteilt. Die erste Teillänge ist auf einer separaten Kabelspule untergebracht und wird mit der Minenvernichtungsladung abgeworfen. Die Rückführung erfolgt mittels Kabelsteuerung über die zweite Teillänge, die auf einer zweiten Kabelspule im Unterwasserfahrzeug untergebracht ist.

Die erste und die zweite Teillänge des kombinierten Steuer- und Zündkabels der bekannten Einrichtung sind mittels eines Verbindungselements (z.B. Stecker) verbunden. Nach Auslösung der Sprengung über das Verbindungskabel geht bei der bekannten Einrichtung die erste Teillänge des kombinierten Steuer- und Zündkabels mit der abgelegten Minenvernichtungsladung verloren. Bei einer Sprengung ist aber auch die zweite Teillänge des Verbindungskabels mit der Minenvernichtungsladung verbunden und wird zerstört bzw. wenigstens soweit beschädigt, dass es aus Kostengründen ersetzt werden muss.

DD 300 526 A5 offenbart einen kabelfemlenkbaren Unterwassergeräteträger, insbesondere ein Minenjagdgerät, welcher ein Steuerkabel nachschleppt, das von einer am Unterwassergeräteträger angeordneten Kabelspule abgespult und auf dem Meeresboden abgelegt wird. Die bekannte Einrichtung geht davon aus, dass beim Positionieren des Unterwassergeräteträgers und bei Drehmanövem infolge des Fehlens einer Kabelabzugskraft die Beschädigungsgefahr des unmittelbar am Rumpf des Unterwassergeräteträgers austretenden Steuerkabels durch hervorstehende Rumpfteile, bspw. Ruder und Seitenleitwerk, insbesondere aber durch die Antriebspropeller, außerordentlich hoch ist. Um die Beschädigungsgefahr für das Steuerkabel zu vermindern und den freiliegenden Teil des Steuerkabels außerhalb des Gefährdungsbereichs der vorstehenden Rumpfteile und Antriebspropeller zu halten, ist bei der bekannten Einrichtung das Steuerkabel innerhalb eines an der Steuerkabelaustrittsöffnung des Unterwassergeräteträgers angeordneten flexiblen Schutzschlauches mit entsprechender Biegesteifigkeit geführt.

Aus WO 2006/074953 A2 ist optisches Kabel bekannt, welches eine Aderhülle und eine Ader mit mehreren Lichtwellenleitern umfasst. Das optische Kabel ist für ein Rangierfeld vorgesehen und weist an seinen Enden Anschlussvorrichtungen auf, welche Steckverbindungselemente zur Herstellung steckbarer optischer Verbindungen umfassen. Zwischen der Ader und dem Kabelmantel ist bei dem bekannten optischen Kabel eine Zugentlastungsanordnung vorgesehen, welche beispielsweise durch Aramidgame gebildet wird.

Das Steckverbindungselement des bekannten optischen Kabels kann eine starre Verbindung aus Steckverbindern sein, welche die Lichtwellenleiter des optischen Kabels innerhalb des Steckverbindungselements beispielsweise durch Röhrchen führt oder fixiert. Die Zugentlastungen der Lichtwellenleiter werden an den Steckverbindungselementen mit gefasst. Bei einer Ausführung der bekannten Anschlussvorrichtung mit mehreren Anschlussfasern (Pigtails), die jeweils einen Lichtwellenleiter und eine diesen umgebende Zugentlastungseinrichtung aufweisen, sind mehrere Steckverbindungselemente vorgesehen, die jeweils zur Herstellung einer einzelnen steckbaren optischen Verbindung ausgebildet sind.

Der vorliegenden Erfindung liegt das Problem zugrunde, eine Einrichtung zum Anschluss eines Lichtwellenleiterkabels an ein unbemanntes Unterwasserfahrzeug sowie ein unbemanntes Unterwasserfahrzeug zu schaffen, welche die Kosten einer Mission des Unterwasserfahrzeugs reduzieren.

Diese Aufgabe wird erfindungsgemäß durch eine Einrichtung zum Anschluss eines Lichtwellenleiterkabels mit den Merkmalen des Patentanspruchs 1 und ein unbemanntes Unterwasserfahrzeug mit den Merkmalen des Patentanspruchs 8 gelöst.

Erfindungsgemäß ist das Lichtwellenleiterkabel über eine Anschlusseinrichtung mit dem Unterwasserfahrzeug verbunden, welche ein als Anschlusskabel und Anschlusselemente an den Enden des Anschlusskabels einerseits für das Lichtwellenleiterkabel und andererseits für das Unterwasserfahrzeug aufweist. Dadurch wird vermieden, dass bei einem Verlust des Unterwasserfahrzeugs durch Sprengungen das in der Regel sehr lange Lichtwellenleiterkabel zur Steuerung des Unterwasserfahrzeugs zerstört wird. Es geht lediglich die Anschlusseinrichtung verloren, welche jedoch als Einweg-Bauteil kostengünstig vorgefertigt werden kann.

Das Anschlusskabel ist ein zweites Lichtwellenleiterkabel. Da sein Verlust in Kauf genommen wird, wird es vorteilhaft mit einer geringen Länge bereitgestellt, welche aber ausreichend ist, um bei einer Sprengung eine Beschädigung des an die Trägerplattform angeschlossenen Lichtwellenleiter-Schwimmkabels zuverlässig zu vermeiden. Die Trägerplattform des Unterwasserfahrzeugs kann dabei stationär oder mobil, etwa an Bord eines Schiffes, eingerichtet sein.

Das im Vergleich zum Anschlusskabel sehr lange Lichtwellenleiterkabel der Trägerplattform kann für weitere Missionen verwendet werden und wird dann mit einer neuen Anschlusseinrichtung ausgerüstet, so dass die Kosten einer Mission, insbesondere einer Minenräumung mit einer Minenjagddrohne der o.g. zweiten Variante, reduziert werden.

Das Einweg-Bauteil kann in größerer Stückzahl an der Trägerplattform bevorratet werden. Auch kann die Zahl der möglichen Missionen für die Trägerplattform erhöht werden, da das lange Lichtwellenleiterkabel wieder verwendet werden kann und anstelle eines Ersatzes für das lange Lichtwellenleiterkabel eine Vielzahl von Anschlusskabeln gelagert werden kann.

Die Anschlusseinrichtung ist auch einfach zu handhaben, da es lediglich weniger Handgriffe zum Anschließen einerseits an das lange Lichtwellenleiterkabel der Trägerplattform und andererseits an das Unterwasserfahrzeug bedarf.

Durch die einfache Handhabung der Anschlusseinrichtung wird auch das Fehlerpotential bei der Vorbereitung einer Mission reduziert.

Das Lichtwellenleiterkabel, das an die Anschlusseinrichtung adaptiert wird, ist vorteilhaft ein Schwimmkabel. Ein Schwimmkabel verhindert, dass die Verbindungsleitung des Unterwasserfahrzeugs an Hindernissen am Meeresgrund hängen bleibt. Mit diesen vorteilhaften Eigenschaften kann auch das Anschlusskabel als Schwimmkabel ausgeführt sein.

Bei einer besonderen Ausführungsform tragen die Enden des Anschlusskabels jeweils Verbindungsstecker, wobei die Anschlusselemente des Anschlusskabels Zugentlastungselemente für die Kabelenden aufweisen, so dass einerseits eine stabile und robuste Lichtwellenleiterverbindung zwischen der Trägerplattform und dem Unterwasserfahrzeug besteht und so die Ausfallwahrscheinlichkeit reduziert wird. Andererseits ist durch die Zugentlastungselemente an den Enden eine zuverlässige Bergung des Kabels und des Unterwasserfahrzeugs gewährleistet. Bei Verwendung von rücksetzbaren Zündern, bspw. EFI-Zündern (Electrical Fuse Ignitor) kann durch die zugentlastete Verbindung die Bergung des Unterwasserfahrzeugs vereinfacht werden. Bei einer Minenräummission, die mit einem Verlust der Minenjagddrohne verbunden ist, kann im Fehlerfall, z.B. bei einem Zündversager, das Unterwasserfahrzeug schnell mit Hilfe der durch Lichtwellenleiterkabel und Anschlusskabel gegebenen Verbindung gefunden und geräumt werden.

Die kostengünstige Anschlusseinrichtung hat zudem den Vorteil der vollständigen Kompatibilität zu bereits bestehenden Lichtwellenleiterkabel-Systemen.

Durch die festliegenden Eigenschaften der Anschlusseinrichtung ist es möglich, eine zuverlässige Einsatzempfehlung entsprechend den Umweltbedingungen zu geben. Es hat sich dabei gezeigt, dass bei den zu berücksichtigenden, situationsbezogenen Parametern der Entfernung zum Ziel und der Gegenströmung für das Unterwasserfahrzeug ein linearer Zusammenhang besteht. Wird der durch Zielentfernung und Gegenströmung linear begrenzte Einsatzbereich für Schwimmkabel und Anschlusskabel überschritten, so ist eine Mission unter Einsatz von zwei Spulen zur Abgabe des Lichtwellenleiterkabels zu empfehlen. Bei dieser Variante ist sowohl an der Trägerplattform als auch an dem Unterwasserfahrzeug eine Spule zur Abgabe des Verbindungskabels vorgesehen, um eine zugentlastete und damit stabile Verbindung zu schaffen. Aufgrund eines linearen Zusammenhangs der situationsbezogenen Parameter, nämlich Zielentfernung und Gegenströmung, kann unterhalb einer Zielentfernung von mehreren hundert Metern sowie einer Gegenströmung von wenigen Knoten eine Eignung der erfindungsgemäßen Steuerung des Unterwasserfahrzeugs durch Lichtwellenleiterkabel und Anschlusseinrichtung als zuverlässig angenommen werden.

Vorteilhaft umfasst das Anschlusselement für das Lichtwellenleiterkabel einen Schwimmkörper, welcher mit einem Zugentlastungselement einen Abschnitt des Anschlusskabels aufnimmt und ein weiteres Zugentlastungselement zur Aufnahme des Lichtwellenleiterkabels aufweist. Dadurch wird die Steckverbindung zwischen dem Lichtwellenleiterkabel und dem Anschlusskabel vor Zugkräften und damit einer ungewollten Trennung geschützt, da Zugkräfte über den festen Schwimmkörper zwischen den beiden verbundenen Kabeln vermittelt werden.

Das Anschlusselement des Anschlusskabels für das Unterwasserfahrzeug ist vorteilhafterweise mit einem radial zum Kabel gestreckten Körper zur Anordnung an einer Heckkammer des Unterwasserfahrzeugs ausgebildet, welcher das Zugentlastungselement für das am Unterwasserfahrzeug anschließbare Ende des Anschlusskabels trägt. Dieser Körper weist eine Kabelführung für das Anschlusskabel auf, durch die das Kabelende zum Anschluss an das Unterwasserfahrzeug geführt ist.

Die Kabelführung ist vorteilhaft durch eine trichterförmige Gestaltung eines Kabelkanals im Anschlusselement gebildet. Dabei ist die Wandung des Trichters gerundet ausgebildet, um das Lichtwellenleiterkabel effektiv vor Beschädigungen durch Abknicken zu schützen und außerdem die mögliche Biegung des Lichtwellenleiters innerhalb eines Bereichs zu halten, in dem optische Reflektion im Lichtwellenleiterkabel erfolgt. Diese Gestaltung des Anschlusselements erlaubt mit wenigen Handgriffen eine zugentlastete und wenig störanfällige Adaption des Unterwasserfahrzeugs.

Die Anschlusseinrichtung ist vorteilhaft vom Unterwasserfahrzeug trennbar ausgebildet, so dass sich die erfindungsgemäße Anschlusseinrichtung für Missionen mit wiederverwendbaren Fahrzeugen eignet. Bspw. kann ein Verfangen des Kabels an einem Unterwasserhindernis, wie einem Wrack, ein Rückholen des Fahrzeugs unmöglich machen, so dass durch eine entsprechend gesteuerte Trennung der Kabelverbindung das Unterwasserfahrzeug gerettet werden kann.

Diese Trennung kann z.B. durch eine Miniatursprengeinrichtung zum Absprengen des Anschlusskabels oder eine fernsteuerbare Schneideinrichtung zum Durchtrennen des Anschlusskabels erfolgen. Derartige Trenneinrichtungen können an einem oder beiden Enden des Anschlusskabels oder auch dazwischen vorgesehen sein.

Auch erlaubt eine kontrollierte Ablösung der Anschlusseinrichtung vom Unterwasserfahrzeug eine teilweise kabelgeführte und teilweise autonome Mission des Unterwasserfahrzeugs. Bspw. kann bis zu einer gewissen Tiefe kabelgeführt und anschließend durch Kabeltrennung auch in größeren Tiefen operiert werden. Die kontrollierte Ablösung der Anschlusseinrichtung vom Unterwasserfahrzeug erlaubt bspw. Arbeiten an Pipelines, die regelmäßig autonom durchzuführen sind.

Die Kabeltrennung erfolgt bei einer besonderen Ausführungsform am Schwimmkörper der Anschlusseinrichtung, so dass das Schwimmkabel eingeholt werden kann. Das Schwimmkabel und die Anschlusseinrichtung können kontrolliert getrennt werden, wenn das Anschlusskabel und dessen Anschlusselemente mit geringerer Zugfestigkeit als das Schwimmkabel ausgebildet werden. Es kann dann durch gezielten Aufbau von Zugkräften, bspw. durch Betätigen der Winsch des Schwimmkabels, eine Abtrennung der Anschlussvorrichtung herbeigeführt werden. Hierzu können auch die Zugentlastungselemente an den Anschlusselementen des Anschlusskabels so angeordnet oder eingestellt werden, dass unterschiedliche Zugfestigkeiten ein gezieltes Ablösen des Kabels ermöglichen.

Die Kosten der Herstellung der erfindungsgemäßen Anschlusseinrichtung sind weiter reduziert, wenn alle Anschlusselemente baugleiche Zugentlastungselemente aufweisen. Die Zugentlastungselemente sind dabei mit den Querschnitten der jeweils angebundenen Kabel abgestimmt. Es ist vorteilhaft, den Querschnitt des Anschlusskabels dem Querschnitt des Schwimmkabels anzugleichen, so dass Kabel mit gleichen Querschnitten und baugleiche Zugentlastungselemente eingesetzt werden können.

Um eine Beschädigung des Anschlusskabels durch den Antrieb des Unterwasserfahrzeugs bzw. ein Aufwickeln des Anschlusskabels um den Antrieb zu vermeiden, ist an dem Anschlusselement für das Unterwasserfahrzeugs eine flexible Röhre angeordnet, durch welche das Anschlusskabel hindurchgeführt ist. Die flexible Röhre weist demnach in Einbaulage vom Unterwasserfahrzeug weg und verhindert ein übermäßiges Abknicken des Anschlusskabels im Bereich des Fahrzeugsantriebs. Die flexible Röhre ist vorteilhaft an dem die Kabelführung aufweisenden Körper angeordnet.

Besonders vorteilhaft ist das Anschlusskabel auf einen Wickelträger aufgewickelt, welcher einem an der Trägerplattform vorgesehen Adapter aufsetzbar ist. Das Einweg-Bauteil kann somit geordnet gelagert und im Bedarfsfall schnell eingesetzt werden. Der Kabelwickel gewährleistet zudem eine sichere Abgabe des Anschlusskabels während der Startphase des Unterwasserfahrzeugs.

Das Einwegbauteil mit dem Kabelwickel ist auch leicht und schnell zu handhaben. Bei der Vorbereitung der Mission muss der Anwender lediglich den Schwimmkörper an das Lichtwellenleiterkabel und das Anschlusskabel an das Unterwasserfahrzeug anschließen sowie den Kabelwickel des Anschlusskabels auf den Adapter setzen, der bspw. an der Reling eines Wasserfahrzeugs befestigt sein kann. Nachdem das Unterwasserfahrzeug ausgesetzt und gestartet ist, wird zunächst die Kabellänge des Anschlusskabels mit bspw. einigen wenigen Dutzend Metern Länge abgespult. Nachdem sich das Anschlusskabel im Wasser befindet, zieht der Schwimmkörper als kraftschlüssige Verbindung zwischen Anschlusskabel und Schwimmkabel das Schwimmkabel ins Wasser und das Unterwasserfahrzeug beginnt das Schwimmkabel von der Kabelwinsch zu nehmen.

Weitere vorteilhafte Ausführungsformen ergeben sich aus den Unteransprüchen sowie den anhand der Zeichnung näher erläuterten Ausführungsbeispielen der Erfindung. In der Zeichnung zeigt:
- Fig. 1: eine schematische Darstellung eines Wasserfahrzeugs und eines unbemannten Unterwasserfahrzeugs, welche mittels eines Lichtwellenleiterkabels und einer erfindungsgemäßen Anschlusseinrichtung miteinander verbunden sind,
- Fig. 2: eine schematische Darstellung einer Einrichtung zum Anschluss eines Lichtwellenleiterkabels an ein unbemanntes Unterwasserfahrzeug.

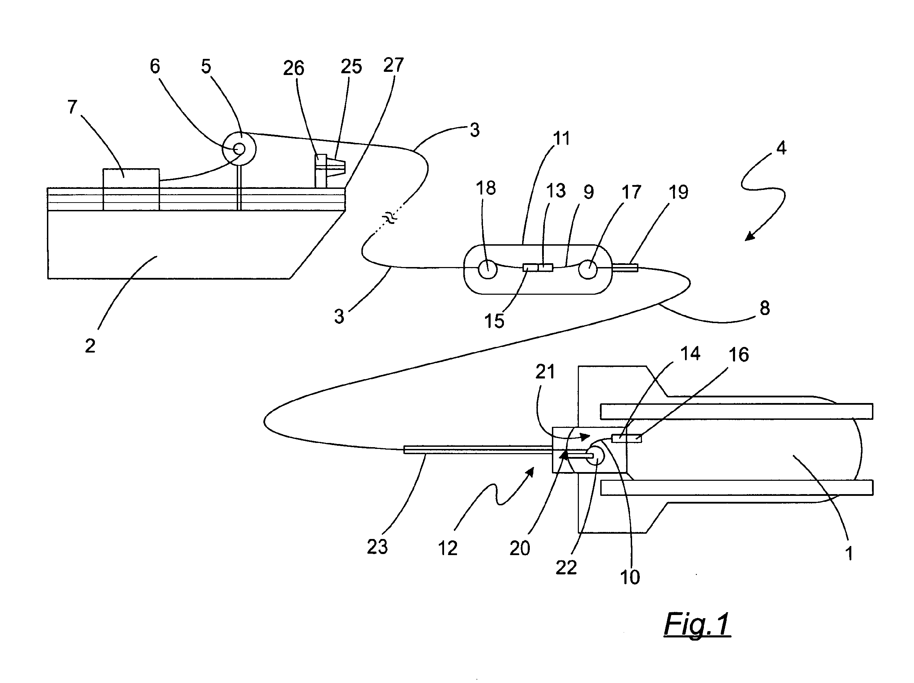

In Fig. 1 ist schematisiert ein unbemanntes Unterwasserfahrzeug 1 dargestellt, welche über eine Kabelverbindung von einer Trägerplattform 2 gesteuert wird. Die Trägerplattform 2 ist im Ausführungsbeispiel ein Überwasserschiff. Alternativ ist die Trägerplattform ein Unterwasserfahrzeug, z.B. ein U-Boot, eine Schwimmplattform, z.B. ein antriebsloses Fahrzeug, wie ein Tender, ein transportierbarer Container oder jedwede Form einer mobilen oder stationären Plattform, die bspw. an Land im Küstenbereich oder am Meeresgrund festgelegt ist, bspw. um von Verminung betroffene Wasserstraßen, insbesondere Meerengen, von Minen befreien zu können. Das Unterwasserfahrzeug 1 ist eine Minenjagddrohne, die für Minenräumungsmissionen mit einer Sprengladung oder mit diversen Sensoren zur Minenerkennung ausgerüstet sein kann.

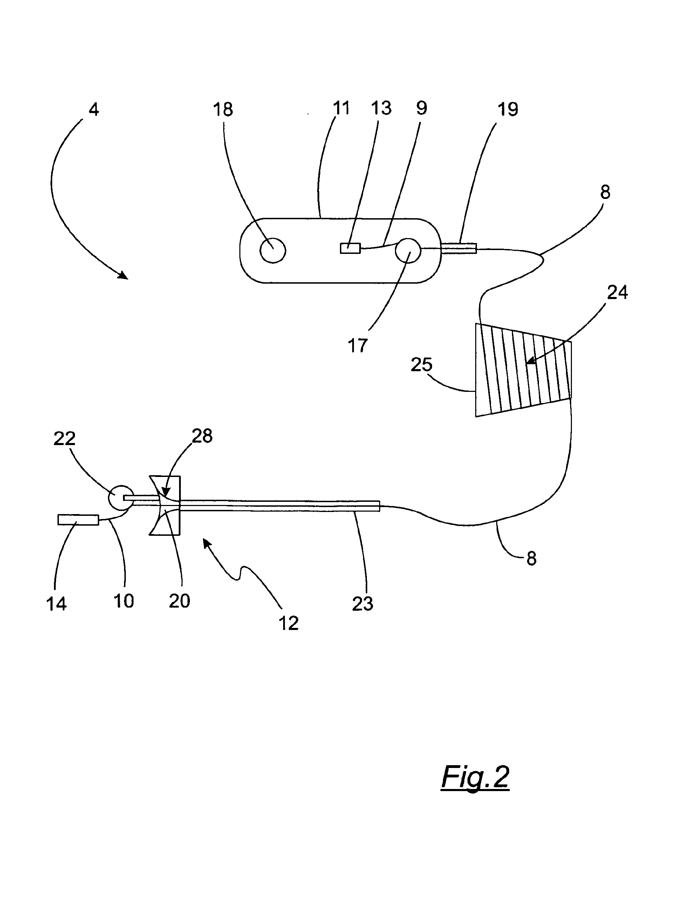

Die Kabelverbindung zur Steuerung des Unterwasserfahrzeugs 1 besteht aus einem Lichtwellenleiter-Schwimmkabel 3, welches mit einer in Fig. 2 separat dargestellten Anschlusseinrichtung 4 an das Unterwasserfahrzeug 1 angeschlossen ist. Das Lichtwellenleiter-Schwimmkabel 3 wird von einer Kabelwinsch 5 an Bord des Wasserfahrzeugs 2 nachgeführt. Eine Zugentlastung 6, die im Ausführungsbeispiel der Kabelwinsch 5 zugeordnet ist, sorgt für einen zugentlasteten Anschluss des Schwimmkabels 3 an eine Steuereinheit 7 der Trägerplattform 2.

Die Anschlusseinrichtung 4 besteht aus einem Lichtwellenleiterkabel als Anschlusskabel 8, an dessen Enden 9, 10 Anschlusselemente angeordnet sind, nämlich am Ende 9 ein Schwimmkörper 11 und am anderen Ende 10 ein Anschlusselement 12 zum Anschluss an das Unterwasserfahrzeug 1.

An beiden Enden 9, 10 des Anschlusskabels ist jeweils ein Stecker 13, 14 angeordnet. Vor dem Aussetzen des Unterwasserfahrzeugs 1 wird der dem Schwimmkörper 11 zugeordnete Stecker 13 mit einem entsprechenden Steckelement 15 des Schwimmkabels 3 verbunden. Der Stecker 14 am anderen Ende 10 des Anschlusskabels 8 wird an einen entsprechenden Kontakt 16 des Unterwasserfahrzeugs 1 angeschlossen.

Der Schwimmkörper 11 ist ein fester Körper, welcher das Ende 9 des Anschlusskabels 8 mit einem Zugentlastungselement 17 aufnimmt. Der Schwimmkörper 11 weist ein weiteres Zugentlastungselement 18 zur Aufnahme des Schwimmkabels 3 auf. Beide Zugentlastungselemente 17, 18 sind am Schwimmkörper 11 befestigt, so dass Zugkräfte zwischen den angeschlossenen Kabeln 3, 8 durch den festen Schwimmkörper 11 vermittelt werden. Der Schwimmkörper 11 ist als länglicher Körper ausgeführt, an dessen Enden jeweils die Zugentlastungen 17, 18 befestigt sind, so dass die Kabelenden in dem Raum zwischen den Zugentlastungselementen 17, 18 leicht zusammen gesteckt werden können und eine zugentlastete Steckverbindung hergestellt wird. Auf diese Weise ist vermieden, dass die sich fortbewegende Minenjagddrohne 1 die Steckverbindung am Schwimmkörper trennt oder aber es bei einem Einholen des Schwimmkabels 3 zu einer unerwünschten Trennung des Verbindungskabels kommt.

Die Steckverbindung zwischen dem Anschlusskabel 8 und dem Schwimmkabel 3 sowie die dazugehörigen Zugentlastungselemente 17, 18 sind im Inneren des Schwimmkörpers 11 aufgenommen. Der Schwimmkörper 11 ist strömungsgünstig geformt und weist im vorliegenden Ausführungsbeispiel in seinem Inneren einen im Hinblick auf die Einsatztiefe des Unterwasserfahrzeugs druckbeständigen, als Auftriebskörper wirkenden Schaum auf. Das Ende 9 des Anschlusskabels 8 ist über einen am Schwimmkörper 11 ausgeformten Knickschutz 19 ins Innere des Schwimmkörpers 11 geführt, so dass ein Abknicken des Anschlusskabels 8 vermieden ist.

Das Anschlusselement 12 für das Unterwasserfahrzeug 1 ist mit einem abschnittsweise radial ausgebildeten Körper zur Anordnung an einer Heckkammer 21 des Unterwasserfahrzeugs 1 ausgebildet, wobei der Körper eine Kabelführung 20 für das Anschlusskabel 8 aufweist. Durch die Kabelführung 20 ist das Ende 10 des Anschlusskabels 8 definiert in die Heckkammer 21 geführt. Die Kabelführung 20 verhindert Beschädigungen der Lichtwellenleitung durch scharfes Abknicken. Ferner ist die Kabelführung an einem oder beiden ihrer Enden derart geformt, dass die für die Lichtwellenleitung einzuhaltenden minimalen Biegeradien tatsächlich eingehalten werden. Dazu weist das (jeweilige) Ende vorzugsweise einen konvex gewölbten trichterförmigen Abschnitt auf.

Das Anschlusselement 12 trägt im Bereich der Kabelführung 20 ein Zugentlastungselement 22, welches während einer Mission das Ende 10 des Anschlusskabels 8 entlastet und vor einer ungewollten Ablösung schützt. Auf der dem Zugentlastungselement 22 gegenüberliegenden Seite mit der Kabelführung 20 ausgestalteten Körpers ist eine flexible Röhre 23 angeordnet, durch welche das Anschlusskabel 8 verläuft. Die flexible Röhre 23, die vorzugsweise aus Silikon besteht, schützt das Anschlusskabel 8 vor übermäßigem Abknicken im Bereich des Anschlusselements 12 und hält das Anschlusskabel 8 insbesondere von dem im Heckbereich der Unterwasserfahrzeug 1 liegenden Antrieb fern.

In einem nicht dargestellten Ausführungsbeispiel kann anstelle einer flexiblen Röhre das Anschlusskabel 8 mit einem Schutzmantel ausgestattet sein, welches sich über die Gesamtlänge des Anschlusskabels erstreckt.

Die in Fig. 2 separat dargestellte Anschlusseinrichtung 4 ist ein kostengünstig herstellbares Einweg-Bauteil, das aus dem Anschlusskabel 8 sowie dem Schwimmkörper 11 und dem Anschlusselement 12 für die Minenjagddrohne besteht. Zu dem Bauteil gehört ein Kabelwickel 24 mit einem Wickelträger 25 auf dem das Anschlusskabel 8 aufgewickelt ist. Der Wickelträger 25 ist im Ausführungsbeispiel eine konusförmige Spule, von der das Anschlusskabel 8 beim Start einer Mission leicht abgenommen werden kann. Bei der Vorbereitung einer Mission der Minenjagddrohne wird der Wickelträger 25 in einem einfachen Arbeitsschritt auf einen Adapter 26 der Trägerplattform 2 (Fig. 1) aufgesteckt. Der Adapter 26 ist im vorliegenden Ausführungsbeispiel an der Reling 27 des Überwasserschiffs befestigt, kann jedoch auch an anderer Stelle des Schiffes angeordnet sein.

Die Anschlusseinrichtung 4 geht als Einweg-Bauteil bei einer Minenjagdmission aufgrund der Zerstörung des Unterwasserfahrzeugs ebenfalls verlustig, wobei jedoch eine Beschädigung des langen Lichtwellenleiterkabels der Trägerplattform durch die Detonation vermieden wird. Das lange Schwimmkabel befindet sich entsprechend der Länge des Anschlusskabels 8 in sicherer Entfernung zum Unterwasserfahrzeug und kann daher wieder verwendet werden. Das Anschlusskabel 8 ist ausreichend lang, um das Schwimmkabel bei einer Sprengung vor Beschädigungen zu schützen.

Die kostengünstige Herstellung und leichte Handhabbarkeit der Anschlusseinrichtung 4 wird weiter dadurch gefördert, dass sämtliche Zugentlastungen 17, 18, 22 an dem Schwimmkörper 11 und der Anschlusseinrichtung 4 dem Anschlusselement 12 baugleich ausgeführt sind.

Die Anschlusseinrichtung 4 ist bei der Vorbereitung einer Mission einfach zu handhaben, so dass Fehlerquellen reduziert werden. Der Anwender muss lediglich das Schwimmkabel 3 in dem Schwimmkörper 11 bzw. dem im Schwimmkörper 11 vorgesehen Zugentlastungselement 18 montieren und anschließend das Unterwasserfahrzeug über die flexible Röhre 23 und den mit der Kabelführung 20 ausgestatteten Körper des Anschlusselements 12 adaptieren. Nachdem das Unterwasserfahrzeug ausgesetzt wurde und gestartet wurde, nimmt es zunächst die Länge des Anschlusskabels 8 von dem Kabelwickel 24 und zieht anschließend über den Schwimmkörper 11 das eigentliche Schwimmkabel 3 ins Wasser. Anschließend nimmt das Unterwasserfahrzeug das Lichtwellenleiter-Schwimmkabel 3 von der Kabelwinsch 5 der Trägerplattform 2. Dabei sorgen die Zugentlastungen 17, 18 im Schwimmkörper 11 für eine Übertragung der Zugkräfte zwischen Anschlusskabel 8 und Schwimmkabel 3 ohne Beeinträchtigung der Glasfaser-Steckverbindung.

In dem Anschlusselement 12 ist ein Lichtwellenleiterkanal 28 ausgebildet, dessen dem Kabelende 10 zugewandter Endabschnitts Teil der Kabelführung 20 ist. Der Endabschnitt des Lichtwellenleiterkanals 28 ist trichterförmig mit einer konvex gerundeten Kontur ausgebildet, wobei die Rundungsradien ein ungewolltes Abknicken des Lichtwellenleiterkabels und damit Beschädigungen des Anschlusskabels 8 vermeiden. Der radiale Körper des Anschlusselements 12 und die in dem Körper ausgebildete Kabelführung 20 bilden so gemeinsam eine etwa s-förmige Kontur aus.

Sämtliche in der Figurenbeschreibung, in den Ansprüchen und in der Beschreibungseinleitung genannten Merkmale sind sowohl einzeln als auch in beliebiger Weise miteinander kombiniert einsetzbar. Die Erfindung ist daher nicht auf die beschriebenen bzw. beanspruchten Merkmalskombinationen beschränkt. Vielmehr sind alle Merkmalskombinationen als offenbart zu betrachten.

## Patentansprüche

1. Anschlusseinrichtung zum Anschluss eines Lichtwellenleiterkabels (3) an ein unbemanntes Unterwasserfahrzeug (1),
**gekennzeichnet durch**
ein Anschlusskabel (8), welches ein Lichtwellenleiterkabel ist, und Anschlusselemente (11, 12) an den jeweiligen Enden (9, 10) des Anschlusskabels (8) für ein Lichtwellenleiterkabel (3) einerseits und für ein unbemanntes Unterwasserfahrzeug (1) anderseits, wobei das Anschlusselement für das Lichtwellenleiterkabel (3) ein Schwimmkörper ist.

2. Anschlusseinrichtung nach Anspruch 1,
**dadurch gekennzeichnet, dass**
die Enden (9, 10) des Anschlusskabels (8) jeweils Verbindungsstecker (13, 14) tragen und die Anschlusselemente (11, 12) Zugentlastungselemente (17, 22) für die Enden (9, 10) des Anschlusskabels (8) aufweisen.

3. Anschlusseinrichtung nach Anspruch 1 oder 2,
**dadurch gekennzeichnet, dass**
der Schwimmkörper (11) mit einem Zugentlastungselement (17) ein Ende (9) des Anschlusskabels (8) aufnimmt und ein weiteres Zugentlastungselement (18) zur Aufnahme des Lichtwellenleiterkabels (3) aufweist.

4. Anschlusseinrichtung nach einem der vorhergehenden Ansprüche,
**dadurch gekennzeichnet, dass**
das Anschlusselement (12) für das Unterwasserfahrzeug (1) mit einem eine Kabelführung (20) aufweisenden Körper zur Anordnung des Anschlusselements (12) an einer Heckkammer (21) des Unterwasserfahrzeugs (1) ausgebildet ist, welcher das Zugentlastungselement (22) für das am Unterwasserfahrzeug (1) anschließbare Ende (10) des Anschlusskabels (8) trägt.

5. Anschlusseinrichtung nach Anspruch 4,
**dadurch gekennzeichnet, dass**
das Anschlusskabel (8) durch eine am Anschlusselement (12) für das Unterwasserfahrzeug (1) angeordnete flexible Röhre (23) geführt ist.

6. Anschlusseinrichtung nach Ansprüche 2 bis 5,
**dadurch gekennzeichnet, dass**
die Anschlusselemente (11, 12) baugleiche Zugentlastungselemente (17, 18, 22) aufweisen.

7. Anschlusseinrichtung nach einem der Ansprüche 1 bis 6,
**dadurch gekennzeichnet, dass**
das Anschlusskabel (8) auf einem Wickelträger (25) aufgewickelt ist.

8. Unbemanntes Unterwasserfahrzeug, welches mittels eines Lichtwellenleiterkabels (3) steuerbar ist, und eine Anschlusseinrichtung (4) nach einem der Ansprüche 1-7 aufweist,
**dadurch gekennzeichnet, dass**
das Lichtwellenleiterkabel (3) über die Anschlusseinrichtung (4) mit dem Unterwasserfahrzeug (1) verbunden ist, welche ein Anschlusskabel (8), das ein Lichtwellenleiterkabel ist, und jeweils ein Anschlusselement (11, 12) einerseits für das erste Lichtwellenleiterkabel (3) und für das Unterwasserfahrzeug (1) aufweist, wobei das Anschlusselement für das Lichtwellenleiterkabel (3) ein Schwimmkörper (11) ist.

9. Unterwasserfahrzeug nach Anspruch 8,
**dadurch gekennzeichnet, dass**
die Anschlusseinrichtung (4) vom Unterwasserfahrzeug (1) trennbar ausgebildet ist.

10. Unterwasserfahrzeug nach Anspruch 8 oder 9,
**dadurch gekennzeichnet, dass**
das Anschlusskabel (8) auf einem Wickelträger (25) aufgewickelt ist, welcher einem Adapter (26) aufsetzbar ist.

## Claims

1. Connection device for connection of an optical fibre cable (3) to an unmanned underwater vehicle (1), **characterised by** a connection cable (8), which is an optical fibre cable, and connection elements (11, 12) at the respective ends (9, 10) of the connection cable (8) for an optical fibre cable (3) on the one hand and for an unmanned underwater vehicle (1) on the other hand, wherein the connection element for the optical fibre cable (3) is a floating body.

2. Connection device according to claim 1, **characterised by** that the ends (9, 10) of the connection cable (8) each bear connection plugs (13, 14) and the connection elements (11, 12) have strain relief elements (17, 22) for the ends (9, 10) of the connection cable (8).

3. Connection device according to claim 1 or 2, **characterised by** that the floating body (11) takes up one end (9) of the connection cable (8) with a strain relief element (17) and has a further strain relief element (18) for taking up the optical fibre cable (3).

4. Connection device according to one of the preceding claims, **characterised by** that the connection element (12) for the underwater vehicle (1) is formed with a body having a cable guide (20) for arranging the connection element (12) on a stern chamber (21) of the underwater vehicle (1), which body bears the strain relief element (22) for the end (10) of the connection cable (8) connectable to the underwater vehicle (1).

5. Connection device according to claim 4, **characterised by** that the connection cable (8) is led through a flexible tube (23) arranged on the connection element (12) for the underwater vehicle (1).

6. Connection device according to claims 2 to 5, **characterised by** that the connection elements (11, 12) have identically constructed strain relief elements (17, 18, 22).

7. Connection device according to one of claims 1 to 6, **characterised by** that the connection cable (8) is wound on a winding support (25).

8. Unmanned underwater vehicle, which is controllable by means of an optical fibre cable (3), and has a connection device (4) according to one of claims 1 to 7, **characterised by** that the optical fibre cable (3) is connected via the connection device (4) to the underwater vehicle (1), which device has a connection cable (8), which is an optical fibre cable, and respectively a connection element (11, 12) for the first optical fibre cable (3) on the one hand and for the underwater vehicle (1), wherein the connection element for the optical fibre cable (3) is a floating body (11).

9. Underwater vehicle according to claim 8, **characterised by** that the connection device (4) is formed separably from the underwater vehicle (1).

10. Underwater vehicle according to claim 8 or 9, **characterised by** that the connection cable (8) is wound on a winding support (25), which can be put on an adapter (26).

## Revendications

1. Dispositif de connexion pour la connexion d'un câble conducteur d'ondes lumineuses (3) sur un sous-marin non habité (1),
**caractérisé par**
un câble de connexion (8), qui est un câble conducteur d'ondes lumineuses, et des éléments de connexion (11, 12) aux extrémités respectives (9, 10) du câble de connexion (8) pour un câble conducteur d'ondes lumineuses (3) d'un côté et pour un sous-marin non habité (1) de l'autre côté, dans lequel l'élément de connexion pour le câble conducteur d'ondes lumineuses (3) est un corps flottant.

2. Dispositif de connexion selon la revendication 1,
**caractérisé en ce que**
les extrémités (9, 10) du câble de connexion (8) portent respectivement des connecteurs de liaison (13, 14) et les éléments de connexion (11, 12) présentent des éléments de décharge de traction (17, 22) pour les extrémités (9, 10) du câble de connexion (8).

3. Dispositif de connexion selon la revendication 1 ou 2,
**caractérisé en ce que**
le corps flottant (11) reçoit avec un élément de décharge de traction (17) une extrémité (9) du câble de connexion (8) et présente un autre élément de décharge de traction (18) pour la réception du câble conducteur d'ondes lumineuses (3).

4. Dispositif de connexion selon l'une des revendications précédentes,
**caractérisé en ce que**
l'élément de connexion (12) pour le sous-marin (1) est formé avec un corps présentant un guide-câble (20) pour la disposition de l'élément de connexion (12) sur une chambre arrière (21) du sous-marin, ledit corps portant l'élément de décharge de traction (22) pour l'extrémité (10) du câble de connexion (8) pouvant être connectée au sous-marin (1).

5. Dispositif de connexion selon la revendication 4,
**caractérisé en ce que**
le câble de connexion (8) est guidé à travers un tube flexible (23) disposé sur l'élément de connexion (12) pour le sous-marin (1).

6. Dispositif de connexion selon les revendications 2 à 5,
**caractérisé en ce que**
les éléments de connexion (11, 12) présentent des éléments de décharge de traction (17, 18, 22) de construction identique.

7. Dispositif de connexion selon l'une des revendications 1 à 6,
**caractérisé en ce que**
le câble de connexion (8) est enroulé sur un support d'enroulement (25).

8. Sous-marin non habité, qui peut être commandé au moyen d'un câble conducteur d'ondes lumineuses (3) et présente un dispositif de connexion (4) selon l'une des revendications 1 à 7,
**caractérisé en ce que**
le câble conducteur d'ondes lumineuses (3) est raccordé au sous-marin (1) par le dispositif de connexion (4), qui présente un câble de connexion (8), qui est un câble conducteur d'ondes lumineuses, et respectivement un élément de connexion (11, 12) d'un côté pour le premier câble conducteur d'ondes lumineuses (3) et pour le sous-marin (1), l'élément de connexion pour le câble conducteur d'ondes lumineuses (3) étant un corps flottant (11).

9. Sous-marin selon la revendication 8,
**caractérisé en ce que**
le dispositif de connexion (4) est formé de manière à pouvoir être séparé du sous-marin (1).

10. Sous-marin selon la revendication 8 ou 9,
**caractérisé en ce que**
le câble de connexion (8) est enroulé sur un support d'enroulement (25), qui peut être placé sur un adaptateur (26).
